# EUROPÄISCHE PATENTSCHRIFT

(11) **EP 2 083 205 B1**
(45) Veröffentlichungstag und Bekanntmachung des Hinweises auf die Patenterteilung: **15.05.2013**
(21) Anmeldenummer: 08021570.0
(22) Anmeldetag: 12.12.2008
(51) Int. Cl.: F16L 37/088

(54) **Steckverbindung zum Verbinden von Leitungen für flüssige oder gasformige Medien**
Connector for connecting conduits for liquid or gaseous media
Connecteur à fiches destiné à relier des conduites pour milieux liquides ou gazeux

(30) Priorität: 28.01.2008 AT 1192008
(43) Veröffentlichungstag der Anmeldung: 29.07.2009
(73) Patentinhaber: Henn GmbH & Co.KG, 6850 Dornbirn (AT)
(72) Erfinder: Hartmann, Harald, 6850 Dornbirn (AT)
(74) Vertreter: Burger, Hannes

(56) Entgegenhaltungen:
- EP-A1- 0 451 900
- EP-A1- 1 698 819
- DE-A1- 3 907 340
- DE-A1-102004 019 799
- DE-A1-102004 019 800
- DE-U1-202007 013 347
- US-A- 5 273 323
- US-A1- 2008 007 055

## Beschreibung

Die Erfindung bezieht sich auf eine Steckverbindung zum Verbinden von Leitungen für flüssige oder gasförmige Medien, umfassend ein erstes Steckerteil, welches einen Durchgangskanal aufweist, ein zweites Steckerteil, in welches das erste Steckerteil in eine Einsteckrichtung einsteckbar ist und welches einen Durchgangskanal aufweist, und eine am zweiten Steckerteil gehaltene Dichtung, wobei das zweite Steckerteil einen zumindest über einen oder mehrere Abschnitte dieses Steckerteils in dessen Umfangsrichtung verlaufenden, in Richtung zur zentralen Längsachse des zweiten Steckerteils abstehenden Steg aufweist, der bezogen auf die Einsteckrichtung des ersten Steckerteils vor der Dichtung angeordnet ist und von einem Abschnitt einer Wandung des zweiten Steckerteils gebildet wird, welcher Abschnitt über eine Abkrümmung an einen zylinderförmigen Mantelabschnitt der Wandung des zweiten Steckerteils anschließt, und wobei der Steg zumindest über einen oder mehrere Abschnitte seines Verlaufs in Umfangsrichtung des zweiten Steckerteils im Längsmittelschnitt durch das zweite Steckerteil gesehen auf der von der Dichtung abgewandten Seite eine Vertiefung ausbildet, wobei ein vom Mantelabschnitt abgelegenes, inneres Ende des Stegs über die Abkrümmung mit einem, von einem Abschnitt der Wandung des zweiten Steckerteils gebildeten Begrenzungssteg verbunden ist, welcher Begrenzungssteg eine Dichtungsnut zur Aufnahme der Dichtung auf der einen Seite der Dichtungsnut begrenzt, sodass eine entsprechende Seitwärtsbewegung der Dichtung in der Dichtungsnut vom Begrenzungssteg gestoppt wird.

Derartige Steckverbindungen, die auch als "Schlauchschnellkupplungen" bezeichnet werden, werden insbesondere im Automobilbereich zur Verbindung von Ladeluftleitungen und Kühlwasserleitungen eingesetzt.

Eine derartige Steckverbindung ist beispielsweise aus der WO 2007/045281 A1 bekannt. Die Dichtung ist am zweiten Steckerteil angeordnet, welches auch als Stecker bezeichnet wird und in das das erste Steckerteil, welches auch als Stutzen bezeichnet wird, einsteckbar ist. Im geschlossenen Zustand der Steckverbindung sind die beiden Steckerteile über eine Rastfeder miteinander verrastet und eine Dichtlippe der Dichtung liegt an einer Dichtfläche des ersten Steckerteils umfänglich an, um die gegenseitige Abdichtung der beiden Steckerteile zu bewirken.

Ein Problem bei dieser herkömmlichen Steckverbindung besteht darin, dass Schmutz von außen in den Dichtbereich gelangen kann, der zu Beschädigungen und Leckagen führen kann. Die Dichtung ist in einer Dichtungsnut des zweiten Steckerteils gehalten, die auf der Seite der Einstecköffnung von einem nach innen vorspringenden Steg begrenzt wird. Dieser weist einen zur Längsachse geneigten Verlauf auf und wirkt somit als Trichter, welcher eintretenden Schmutz zur Dichtlippe führt. In den Bereich zwischen der Dichtlippe und der Dichtfläche des ersten Steckerteils eingedrungener Schmutz kann durch Vibrationen und auftretende kleinere Relativbewegungen zwischen den beiden Steckerteilen im Laufe der Zeit immer weiter zur Dichtkante transportiert werden. Durch die Schmutzpartikel, welche die Dichtkante erreichen kann es zu Undichtheiten kommen und durch über die Dichtlippe rutschende Schmutzpartikel kann diese beschädigt werden, mit der Folge von dauerhaften Leckstellen.

Eine weitere Dichtung der eingangs genannten Art geht aus der WO 2005/103551 A1 hervor, wobei hier ein separater, die Dichtung haltender Sicherungsring vorgesehen ist. Neben dem mit dem Einsetzen und Verankern des separaten Sicherungsrings zusätzlichen Aufwand besteht auch hier das Problem des Eindringens von Schmutz zur Dichtkante. Insbesondere offenbart die WO 2005/103551 A1 bzw. die prioritätsbegründende DE 10 2004 019 799 A1, welche auf die Anmelderin zurückgeht, eine gattungsgemäße Steckverbindung zum Verbinden von Leitungen, umfassend ein erstes Steckerteil und ein zweites Steckerteil, in welches das erste Steckerteil einsteckbar ist und welches zweite Steckerteil eine an einer Innenseite in einer Dichtungsnut gehaltene Dichtung aufweist, welche Dichtung bei einer verbundenen Steckverbindung an einer Außenseite des eingesteckten, ersten Steckerteils anliegt und auf diesem Weg die Steckverbindung abdichtet. Von einer Einstecköffnung des zweiten Steckerteils aus betrachtet sind im zweiten Steckerteil in einem Innenumfangsbereich vor der Dichtung mehrere, entlang des Umfangs in etwa gleichmäßig beabstandete, radial nach innen gerichtete Stegabschnitte ausgebildet, welche Stegabschnitte einen dahinter angeordneten, separat zum zweiten Steckerteil ausgebildeten Sicherungsring halten bzw. fixieren. In seiner fixierten Position begrenzt der Sicherungsring die Dichtungsnut an einer Seite und hält bzw. fixiert somit seinerseits die Dichtung in der Dichtungsnut.

Vor den Stegabschnitten bzw. dem Sicherungsring ist eine entlang des Innenumfangs des zweiten Steckerteils umlaufende Vertiefung ausgebildet, welche Vertiefung damit vor der Dichtungsnut bzw. der Dichtung angeordnet ist. Die Stegabschnitte werden im Zuge der Fixierung der Dichtung mit dem Sicherungsring in der Dichtungsnut mittels eines Schneid- bzw. Umformwerkzeugs aus einem Abschnitt der Innenwandung des zweiten Steckerteils hergestellt, indem diese Abschnitte radial in Richtung zu einer zentralen Längsachse des zweiten Steckerteils verformt und dabei teilweise auch nach hinten auf den Sicherungsring gedrückt werden, wodurch die Dichtung in der Dichtungsnut fixiert wird. Bei diesem Umformungsvorgang ist es wahlweise auch vorgesehen, die Stegabschnitte in ihren Basisbereichen jeweils von der Innenwandung des zweiten Steckerteils abzuschneiden, sodass der Umformungsvorgang besser durchführbar ist und wobei Öffnungen im Bereich der Stegabschnitte in der Innenwandung des zweiten Steckerteils ausgebildet werden. Insbesondere wird durch diese Öffnungen eine Verbindung der Vertiefung vor den Stegabschnitten bzw. dem Sicherungsring mit einem Raum des zweiten Steckerteils geschaffen, welcher Raum mit einem Außenraum außerhalb der Steckverbindung in Verbindung steht.

In der DE 10 2004 019 799 A1 wird die Ausbildung einer im Querschnitt L-förmigen Dichtungsnut mit Sicherungsring als sehr vorteilhaft beschrieben. Dem gegenüber wird von der Ausbildung einer im Querschnitt U-förmigen Dichtungsnut beispielsweise aufgrund der dabei geforderten, hohen Maßhaltigkeit abgeraten.

Weitere Steckverbindungen, bei denen die Dichtung in einer in achsialer Richtung offenen Nut gehalten ist, gehen aus der WO 2005/047751 A1, WO 2005/045299 A1 und WO 2005/047752 A1 hervor.

Aufgabe der Erfindung ist es eine verbesserte Steckverbindung der eingangs genannten Art bereitzustellen. Erfindungsgemäß gelingt dies durch eine Steckverbindung mit den Merkmalen des Patentanspruchs 1.

Bei der Steckverbindung gemäß der Erfindung weist der die Dichtungsnut begrenzende Begrenzungssteg eine hinterschnittene Form auf und ist durch eine solche Hinterschneidung ein Raum ausgebildet, wobei ein Dichtungsfuß der Dichtung zur Ermöglichung bzw. Erleichterung des Eintritts von Schmutzpartikeln in den Raum an seiner dem Begrenzungssteg zugewandten Stirnseite eine Mehrzahl von in Umfangsrichtung beabstandeten Nuten aufweist.

Die Vertiefung wird vorzugsweise durch einen gebogenen Verlauf der den Steg bildenden Wandung des zweiten Steckerteils gebildet, wobei es auch denkbar und möglich wäre, die Vertiefung durch eine Ausnehmung im Material des Steges auszubilden. Der ausgebildete vertiefte Bereich ist in radialer Richtung zur zentralen Längsachse des zweiten Steckerteils hin durch den Steg begrenzt.

Von dieser Vertiefung kann in den Bereich zwischen die beiden Steckerteile eindringender Schmutz aufgenommen werden, sodass einem Vordringen von Schmutz zur Dichtung entgegengewirkt wird.

In einer vorteilhaften Ausführungsform der Erfindung weist der Boden des Stegs im Bereich der Vertiefung mindestens eine Öffnung auf. Vorzugsweise sind mehrere solche in Umfangsrichtung des zweiten Steckerteils voneinander beabstandete Öffnungen vorhanden. Durch diese Öffnungen kann in die Vertiefung gelangender Schmutz abgeführt werden. Die Öffnungen münden hierbei auf der anderen Seite des Stegs vorzugsweise in einen zum Außenraum hin offenen Raum des zweiten Steckerteils. Denkbar und möglich wäre es beispielsweise auch, dass diese Öffnungen direkt in den Außenraum münden. Auch eine Mündung in einen geschlossenen Aufnahmeraum des zweiten Steckerteils wäre denkbar und möglich.

Vorzugsweise verläuft der Steg ringförmig, insbesondere kreisringförmig, um die zentrale Längsachse des zweiten Steckerteils und die Vertiefung erstreckt sich in Umfangsrichtung des Steges über dessen gesamten Verlauf, ist also insgesamt ringförmig, insbesondere kreisringförmig, ausgebildet.

In einer vorteilhaften Ausführungsform der Erfindung weist die am zweiten Steckerteil gehaltene Dichtung zusätzlich zur Dichtlippe eine Schmutzlippe auf. Diese liegt, ebenso wie die Dichtlippe, am ersten Steckerteil an, vorzugsweise über den gesamten Umfang des ersten Steckerteils, und zwar außerhalb des von der Dichtlippe abgedichteten Innenraums der Steckverbindung. D. h. der Anlagebereich der Dichtlippe ist näher beim einsteckseitigen Ende des ersten Steckerteils als der Anlagebereich der Schmutzlippe. Schmutzpartikel, die über den Steg bis zur Dichtung gelangen, werden somit - zumindest großteils, von einem Vordringen bis zur Dichtlippe abgehalten, wodurch die dauerhafte Dichtheit der Steckverbindung weiter verbessert werden kann.

Im geschlossenen Zustand der Steckverbindung sind das erste Steckerteil und das zweite Steckerteil vorzugsweise miteinander verrastet, insbesondere mittels mindestens einer Rastfeder, wobei die Verrastung zum Öffnen der Steckverbindung günstigerweise entrastbar ist. Derartige Rasteinrichtungen sind bekannt.

Wenn im Rahmen dieser Schrift von "innen" und "außen" die Rede ist, so ist dies auf die Lage zur zentralen Längsachse bezogen, d.h. ein weiter innen liegendes Teil hat einen geringeren Abstand von der zentralen Längsachse als ein weiter außen liegendes Teil.

Weitere Vorteile und Einzelheiten der Erfindung werden im Folgenden anhand der beiliegenden Zeichnung erläutert. In dieser zeigen:
Fig. 1 eine Schrägsicht des ersten und zweiten Steckerteils im geöffneten Zustand der Steckverbindung;
Fig. 2 eine Schrägsicht entsprechend Fig. 1, das erste Steckerteil und das zweite Steckerteil abgesehen von der Dichtung aber in Längsrichtung mittig aufgeschnitten;
Fig. 3 ein vergrößertes Detail A von Fig. 2;
Fig. 4 eine Schrägsicht des zweiten Steckerteils aus einem geänderten Blickwinkel;
Fig. 5 eine Schrägsicht des entlang der Linie BB in Fig. 4 aufgeschnittenen zweiten Steckerteils;
Fig. 6 ein vergrößertes Detail C von Fig. 5;
Fig. 7 eine stirnseitige Ansicht des ersten und zweiten Steckerteils, die Steckerteile achsial ausgerichtet aber voneinander getrennt;
Fig. 8 einen Schnitt entlang der Linie DD von Fig. 7;
Fig. 9 ein vergrößertes Detail E von Fig. 8;
Fig. 10 eine stirnseitige Ansicht der Steckverbindung im geschlossenen Zustand der Steckverbindung;
Fig. 11 einen Schnitt FF von Fig. 10;
Fig. 12 ein vergrößertes Detail G von Fig. 11;
Fig. 13, Fig. 14 (Schnitt HH von Fig. 13) und Fig. 15 (Detail I von Fig. 14) sowie Fig. 16,
Fig. 17 (Schnitt JJ von Fig. 16) und Fig. 18 (Detail K von Fig. 17) Darstellungen entsprechend den Fig. 10 bis 12 in verschiedenen Phasen des Schließens der Steckverbindung;
Fig. 19 einen Querschnitt durch eine Dichtung entsprechend einer etwas modifizierten Ausführungsform.

Die Figuren weisen verschiedene Maßstäbe auf.

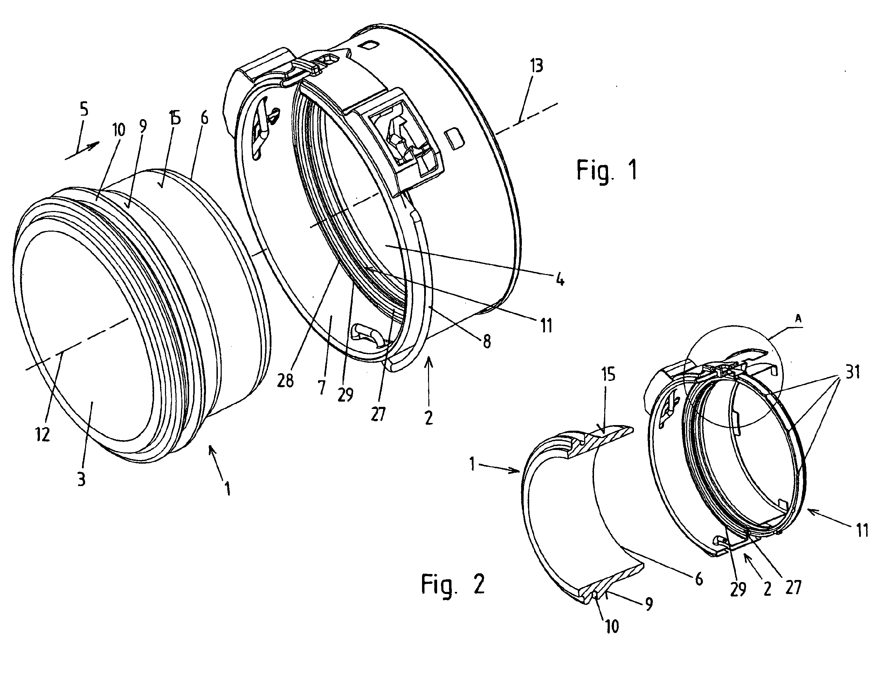

Ein Ausführungsbeispiel für eine erfindungsgemäße Steckverbindung in Form einer Schnellkupplung zum Verbinden von Leitungen für flüssige oder gasförmige Medien ist in den Fig. 1 bis 18 dargestellt. Die Steckverbindung umfasst ein rohrförmiges erstes Steckerteil 1 (=Stutzen) und ein rohrförmiges zweites Steckerteil 2 (=Stecker). Die beiden Steckerteile 1, 2 weisen jeweils einen Durchgangskanal 3, 4 zum Durchtritt des Mediums auf. Zum Schließen der Steckverbindung wird das erste Steckerteil 1 in eine parallel zur zentralen Längsachse 12 des ersten Steckerteils 1 liegende Einsteckrichtung 5 in den Durchgangskanal 4 des zweiten Steckerteils 2 eingesteckt. Hierbei wird das bezogen auf die Einsteckrichtung 5 vorne liegende einsteckseitige Ende 6 des ersten Steckerteils 1 in die von der einsteckseitigen Mündung des Durchgangskanals 4 gebildete Einstecköffnung 7 des zweiten Steckerteils 2 eingeführt.

Im geschlossenen Zustand der Steckverbindung ist das erste Steckerteil 1 im zweiten Steckerteil 2 verrastet. Hierzu dient eine am zweiten Steckerteil 2 angeordnete Rastfeder 8, welche beim Einstecken des ersten Steckerteils 1 über eine Schrägfläche 9 des ersten Steckerteils 1 geführt wird und im verrasteten Zustand hinter eine Rastschulter 10 des ersten Steckerteils 1 einschnappt. Die Schrägfläche und die Rastschulter 10 werden von einem das erste Steckerteil 1 außen umgebenden ringförmigen Vorsprung gebildet. Unterschiedliche andere Ausführungsformen von Rastmechanismen sind denkbar und möglich.

Eine Dichtung 11 dient zur Abdichtung eines Innenraums der Steckverbindung, welcher den Durchgangskanal 3 des ersten Steckerteils 1 und denjenigen Abschnitt des Durchgangskanals 4 des zweiten Steckerteils 2 umfasst, welcher sich vom der Einstecköffnung 7 gegenüber liegenden Ende des zweiten Steckerteils 2 bis zur Dichtung 11 erstreckt. Die Dichtung 11 ist ringförmig, insbesondere kreisringförmig, ausgebildet. Die Dichtung 11 ist am zweiten Steckerteil 2 gehalten, wobei sie an der inneren, der zentralen Längsachse 13 zugewandten Oberfläche des zweiten Steckerteils 2 anliegt und die zentrale Längsachse 13 umgibt.

Im geschlossenen Zustand der Steckverbindung fällt die zentrale Längsachse 12 des ersten Steckerteils 1 mit der zentralen Längsachse 13 des zweiten Steckerteils 2 zusammen.

Die Dichtung 11 und die zur gegenseitigen Abdichtung zwischen den beiden Steckerteilen 1, 2 dienenden Oberflächen der beiden Steckerteile 1, 2 sind rotationssymmetrisch ausgebildet. Vorzugsweise sind die beiden Steckerteile 1, 2 insgesamt im Wesentlichen rotationssymmetrisch ausgebildet (abgesehen von Rastelementen, Verdrehsicherungselementen und dgl.).

Die Dichtung 11 weist eine Dichtlippe 14 auf, welche zur Abdichtung gegenüber dem ersten Steckerteils 1 dient und an einer äußeren, d.h. von der zentralen Längsachse 12 abgewandten, Oberfläche 15 des ersten Steckerteils 1 umfänglich anliegt. Diese äußere Oberfläche 15 bildet eine Dichtfläche des ersten Steckerteils 1.

Die Dichtung 11 umfasst weiters eine von einer weiteren Lippe gebildete Schmutzlippe 16. Im geschlossenen Zustand der Steckverbindung liegt die Schmutzlippe 16 ebenfalls an der äußeren Oberfläche 15 des ersten Steckerteils 1 umfänglich an. Die Schmutzlippe 16 wirkt somit einem Vordringen von Schmutz bis zur Dichtkante der Dichtlippe 14 (=im Wesentlichen linienförmiger Anlagebereich der Dichtlippe 14) entgegen. Die Dichtkante der Schmutzlippe 16 (=im Wesentlichen linienförmiger Anlagebereich der Schmutzlippe 16) ist hierbei weiter vom einsteckseitigen Ende 6 des ersten Steckerteils 1 entfernt als die Dichtkante der Dichtlippe 14.

Die Dichtlippe 14 und die Schmutzlippe 16 sind im Bereich ihrer Lippenbasen miteinander verbunden. Als Lippenbasis einer Lippe einer Dichtung wird in der vorliegenden Schrift derjenige Bereich der Dichtung verstanden, ausgehend von welchem die Lippe von einem anderen Teil der Dichtung frei abstehend ausgebildet ist.

Zumindest im geschlossenen Zustand der Steckverbindung weist das freie Ende 17 der Dichtlippe 14 in Richtung zum einsteckseitigen Ende 6 des ersten Steckerteils 1 und das freie Ende 18 der Schmutzlippe 16 in Richtung zur Einstecköffnung 7 des zweiten Steckerteils 2. Hierbei sind vorzugsweise beide Lippen 14, 16 gegenüber der zentralen Längsachse 12, 13 des ersten und zweiten Steckerteils 1, 2 noch etwas geneigt (weniger geneigt als im geöffneten Zustand der Steckverbindung) wodurch auch Toleranzen aufgenommen werden können.

Die Dichtlippe 14 und Schmutzlippe 16 sind ausgehend von ihrem Verbindungsbereich an ihren Lippenbasen über einen Verbindungssteg 20 mit einem Dichtungsfuß 19 verbunden. Es könnte auch mehr als ein solcher Verbindungssteg 20 vorhanden sein, wobei die Lippenbasen im Bereich zwischen den Verbindungsstegen 20 über Verbindungsabschnitte miteinander verbunden wären.

Im gezeigten Ausführungsbeispiel ist der Dichtungsfuß 19 in einer zur zentralen Längsachse 13 hin offenen Dichtungsnut 21 des zweiten Steckerteils 2 gehalten. Denkbar und möglich wäre es auch, dass beispielsweise der Dichtungsfuß 19 in einer in achsialer Richtung sich öffnenden Dichtungsnut 21 eingeklemmt ist. Um einen guten Halt der Dichtung 11 in der Dichtungsnut 21 zu erreichen ist vorteilhafterweise der Außendurchmesser der Dichtung 11 im entspannten Zustand etwas grösser als der Durchmesser des Bodens der Dichtungsnut 21.

Der Dichtungsfuß 19 umfasst im gezeigten Ausführungsbeispiel einen vom Verbindungssteg 20 in Richtung zur Einstecköffnung 7 des zweiten Steckerteils 2 abstehenden Abschnitt 19a, der auch als Basisabschnitt oder Basiskörper der Dichtung 11 bezeichnet werden könnte, und einen in die entgegengesetzte Richtung abstehenden Abschnitt 19b, der auch als statische Dichtlippe bezeichnet werden könnte. An diesem Abschnitt 19b ist an der dem zweiten Steckerteil 2 zugewandten Seite eine Erhebung vorhanden, welche eine Dichtkante zur Abdichtung der Dichtung 11 gegenüber dem zweiten Steckerteil 2 bildet.

Das zweite Steckerteil 2 weist einen nach innen (=in Richtung zur zentralen Längsachse 13) abstehenden Steg 27 auf, der bezogen auf die Einsteckrichtung 5 des ersten Steckerteils 1 vor der Dichtung 11 angeordnet ist. Der Steg 27 weist eine (bezogen auf die zentrale Längsachse 13 des zweiten Steckerteils 2) radiale Erstreckung auf, die sich mit der radialen Erstreckung der Dichtung 11 teilweise überlappt wie aus dem Längsschnitt durch das zweite Steckerteil 2 ersichtlich. Hierbei steht ein Teil der Dichtung 11 über den Bereich der radialen Erstreckung des Steges 27 nach innen (= in Richtung zur zentralen Längsachse 13) vor.

Der Steg 27 bildet an seiner von der Dichtung 11 abgewandten Seite, also der Einstecköffnung 7 zugewandten Seite, eine Vertiefung 28 aus. Mit anderen Worten wird vom Steg 27 in radialer Richtung eine hinterschnittene Kontur ausgebildet. Der Bereich der Hinterschneidung bildet die Vertiefung 28.

Die Vertiefung 28 erstreckt sich in Umfangsrichtung des Steges 27 rinnenförmig. Vorzugsweise sind, wie dargestellt, am Boden der Vertiefung mehrere in Umfangsrichtung voneinander beabstandete Öffnungen 29 ausgebildet. Diese münden auf der anderen Seite des Stegs 27 in den zum Außenraum offenen Raum 36 des zweiten Steckerteils 2.

Durch die die Vertiefung 28 ausbildende Form des Steges 27 werden in den vertieften Bereich des Steges gelangende Schmutzpartikel von der Dichtung 11 weggelenkt und können durch die Öffnungen 29 im Boden der Vertiefung 28 aus dem zweiten Steckerteil 2 herausfallen.

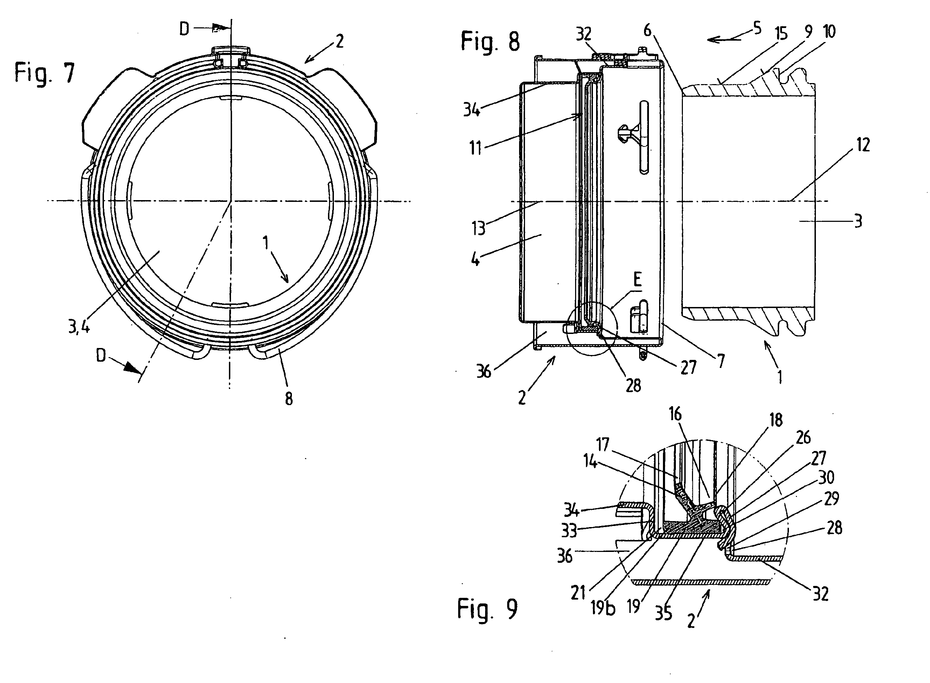

Im gezeigten Ausführungsbeispiel der Erfindung wird der Steg 27 von einem Abschnitt der Wandung des zweiten Steckerteils gebildet, der über eine Abkrümmung an einen zylinderförmigen Mantelabschnitt 32 der Wandung des Steckerteils 2 anschließt (vgl. Fig. 8 und 9). Das vom Mantelabschnitt 32 abgelegene innere Ende des Stegs 27 ist über eine im Wesentlichen über 180° verlaufende Umkrümmung (im Längsschnitt durch das zweite Steckerteils 2 gesehen) mit einem Begrenzungssteg 26 verbunden, der die umlaufende Dichtungsnut 21 zur Aufnahme der Dichtung 11 auf der zur Einstecköffnung 7 gerichteten Seite der Dichtungsnut 21 begrenzt.

Auf der anderen Seite ist die Dichtungsnut 21 von einem weiteren Begrenzungssteg 33 begrenzt, der über eine Abkrümmung mit einem zylinderförmigen Mantelabschnitt 34 des zweiten Steckerteils 2 verbunden ist. Die Begrenzungsstege 26, 33 sind über Umkrümmungen mit dem Bodensteg 35 der Dichtungsnut 21 verbunden.

Der Begrenzungssteg 26, mit dem der Steg 27 über eine Umkrümmung verbunden ist, weist eine kleinere radiale Ausdehnung auf, als der Steg 27. Dadurch liegen die Öffnungen 29 im Boden der Vertiefung 28 radial weiter außen (= weiter von der zentralen Längsachse 13 entfernt), als der Bodensteg 35 der Dichtungsnut 21.

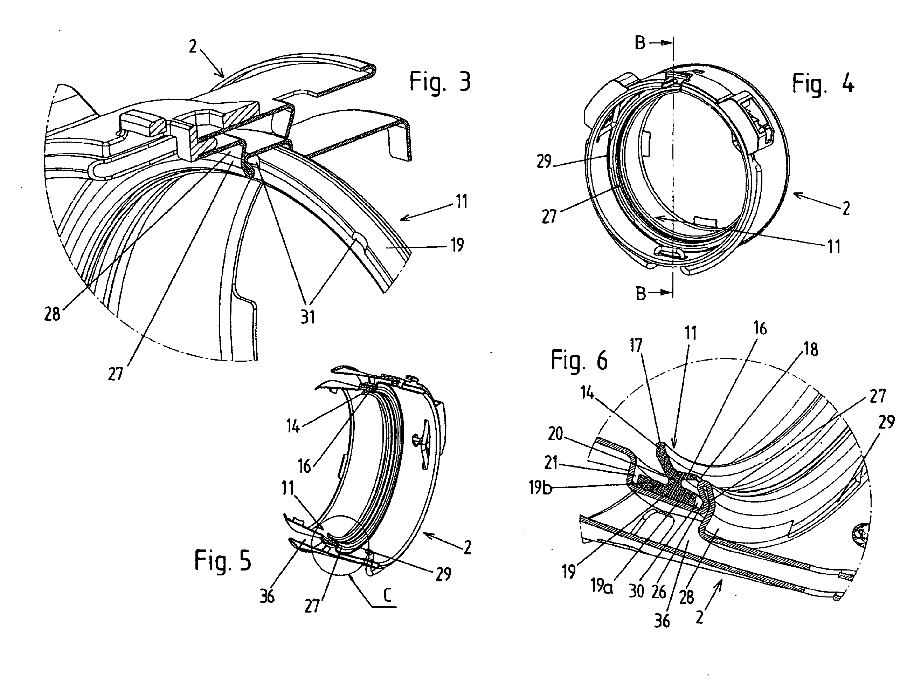

Der die Dichtungsnut 21 begrenzende Begrenzungssteg 26 weist ebenfalls eine hinterschnittene Form auf. In den von der Hinterschneidung gebildeten Raum 30 können über den Steg 27 gelangende und von der Schmutzlippe 16 abgehaltene Schmutzpartikel gelangen. Der Raum 30 bildet also einen Aufnahmeraum für solche Schmutzpartikel. Zur Erleichterung bzw. Ermöglichung des Eintritts der Schmutzpartikel in den Raum 30 weist der Dichtungsfuß 19 an seiner der Einstecköffnung 7 zugewandten Stirnseite (also am freien Ende des Abschnitts 19a) eine Mehrzahl von in Umfangsrichtung beabstandeten Nuten 31 auf (vgl. Fig. 2 und 3).

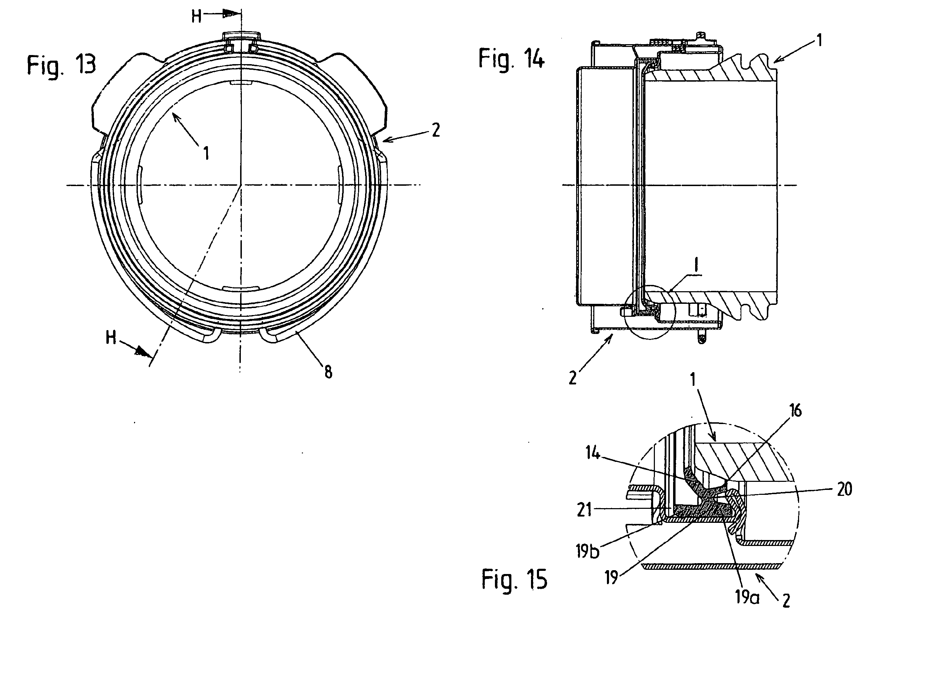

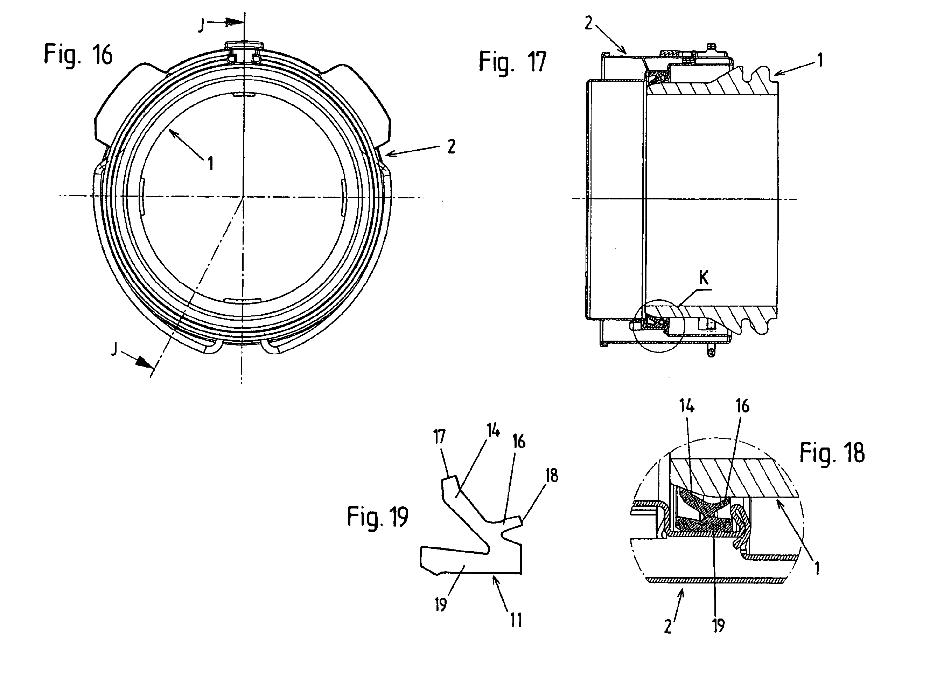

Wenn das erste Steckerteil 1 in das zweite Steckerteil 2 eingesteckt wird, so ist die Schmutzlippe 16 zunächst von der äußeren Oberfläche des ersten Steckerteils 1 noch beabstandet (zumindest über einen Teil des Umfangs dieser äußeren Oberfläche) vgl. Fig. 14 und 15. Wenn die äußere Oberfläche 15 des ersten Steckerteils 1 an die Dichtlippe 14 anläuft, so wird diese zunehmend eingedrückt bzw. verschwenkt (unter Verringerung der Neigung der Dichtlippe 14 gegenüber der zentralen Längsachse 13), wobei die Schmutzlippe 16 aufgestellt wird, d. h. ihre Neigung gegenüber der zentralen Längsachse 13 des zweiten Steckerteils vergrößert sich. Hierbei wird der Durchmesser der von der Dichtlippe 14 freigegebenen Öffnung vergrößert und der Durchmesser der von der Schmutzlippe 16 freigegebenen Öffnung verringert. Die Fig. 17 und 18 zeigen die Stellung, ab welcher die Schmutzlippe 16 umfänglich an der äußeren Oberfläche 15 des ersten Steckerteils 1 anliegt. Die Anlagestelle der Dichtlippe 14 am ersten Steckerteil 1 befindet sich hierbei noch im Bereich einer Einlaufschrägen des ersten Steckerteils 1. Etwa ab der in den Fig. 17 und 18 dargestellten Stellung beginnen die Dichtlippe 14 und Schmutzlippe 16 zu dichten. Beim weiteren Einfahren des ersten Steckerteils 1 in den Durchgangskanal 4 des zweiten Steckerteils 2 wird die Anpresskraft sowohl der Dichtlippe 14 als auch der Schmutzlippe 16 noch vergrößert.

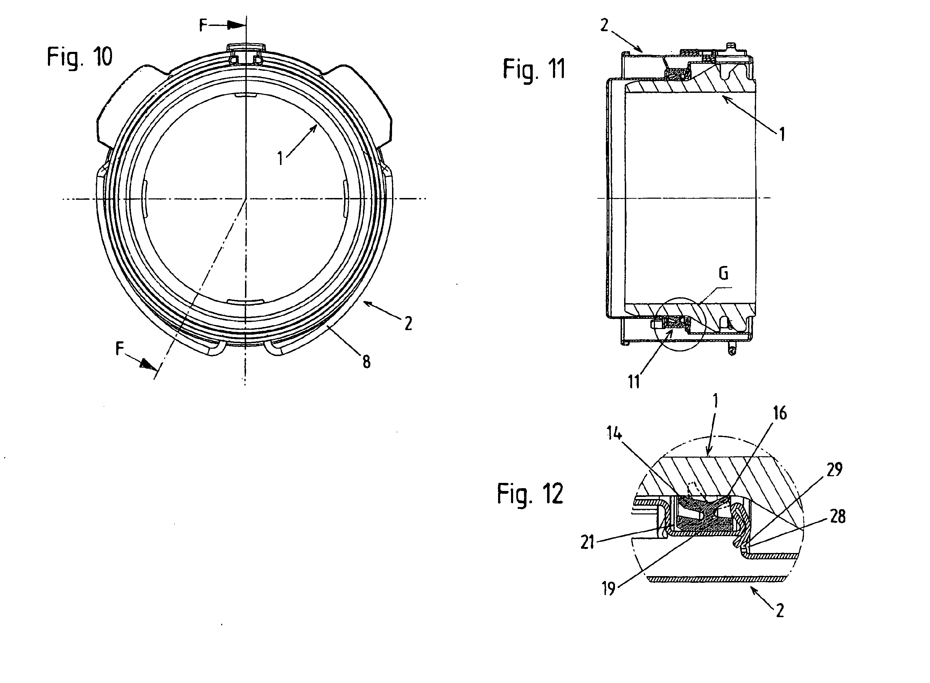

Beim Eindrücken bzw. Verschwenken der Dichtlippe 14 kommt es auch zu einer Verformung des Verbindungssteges 20 (vgl. Fig. 12).

Die Einlaufschräge des ersten Steckerteils 1 kann von einer Einlauffase oder einem Einlaufradius gebildet werden.

Vorteilhafterweise liegt im geöffneten Zustand der Steckverbindung das freie Ende 18 der Schmutzlippe 16 in der achsialen Einsteckrichtung 5 gesehen zumindest teilweise hinter dem nach innen vorspringenden Begrenzungssteg 26 des zweiten Steckerteils 2, welcher die Dichtungsnut 21 zur Seite der Einstecköffnung 7 hin begrenzt, wie dies aus Fig. 6 besonders gut sichtbar ist. Es wird dadurch verhindert, dass beim Einstecken das einsteckseitige Ende 6 des ersten Steckerteils 1 derart an die Schmutzlippe 16 anlaufen kann, dass diese mitgenommen und hierbei aufgestellt und verdrillt wird, wobei die Dichtung 11 aus der Dichtungsnut 21 herausgezogen werden könnte.

Die Dichtlippe 14 und die Schmutzlippe 16 bestehen aus einem gummielastischen Material, beispielsweise einem Elastomer, einem termoplastischen Elastomer oder Silikon. Vorzugsweise besteht die Dichtung 11 insgesamt aus einem solchen gummielastischen Material. Denkbar und möglich ist es auch, dass diese zusätzlich andere Materialien aufweist, beispielsweise als Verstärkungseinlagen.

Die Steckerteile 1, 2 können aus Kunststoff und/oder Metall ausgebildet sein.

Eine etwas modifizierte Ausführungsform der Dichtung 11 ist in Fig. 19 dargestellt. Hier geht die Dichtlippe 14 vom Randbereich des Dichtungsfußes 19 aus und die Schmutzlippe 16 geht von der Dichtlippe 14 aus, und zwar im Abstand von der Lippenbasis der Dichtlippe 14 (=im Abstand vom Verbindungsbereich der Dichtlippe 14 mit dem Lippenfuß 19). Die Ausbildung der Dichtung 11 könnte auch bei dieser Ausführungsform derart aufgefasst werden, dass die Dichtlippe 14 und die Schmutzlippe 16 im Bereich ihrer Lippenbasen miteinander verbunden sind. Als Dichtlippe 14 würde somit nur der Abschnitt der Dichtung angesehen werden, welcher ausgehend vom Verbindungsbereich mit der Schmutzlippe 16 frei absteht. Die miteinander verbundenen Lippenbasen der Dichtlippe 14 und der Schmutzlippe 16 sind in dieser Sichtweise somit wiederum über einen Verbindungssteg mit dem Dichtungsfuß 19 verbunden, und zwar in diesem Ausführungsbeispiel mit dem Randbereich des Dichtungsfußes 19.

Unterschiedliche Modifikationen der gezeigten Ausführungsbeispiele sind denkbar und möglich, ohne den Bereich der Erfindung zu verlassen. So könnte die Dichtung 11 beispielsweise auch mehr als eine Dichtlippe und/oder Schmutzlippe aufweisen. Die Schmutzlippe 16 könnte auch entfallen. Es könnten auch mehrere Dichtungen zur Abdichtung zwischen dem ersten und zweiten Steckerteil vorgesehen sein.

Denkbar und möglich wäre es auch, dass sich der Steg 27 nur über einen Teil, vorzugsweise Großteil, des vollständigen Umfangs des zweiten Steckerteils 2 erstreckt, wobei ein oder mehrere teilringförmig verlaufende Abschnitte des Stegs 27 vorhanden sind.

Denkbar und möglich wäre es auch, dass sich die Vertiefung 28 nur über einen Teil, vorzugsweise Großteil, des Verlaufs des Stegs 27 in dessen Umfangsrichtung erstreckt.

Weiters wären auch andere Ausbildungen des Stegs 27 als durch einen abgebogenen Abschnitt der Wandung des zweiten Steckerteils denkbar und möglich.

Durch eine erfindungsgemäße Steckverbindung sind Leitungen für flüssige oder gasförmige Medien einfach, zuverlässig und dauerhaft abgedichtet miteinander verbindbar. Es können Leitungen z.B. in Form von Schläuchen, Rohren oder in Form von in medienführenden Teilen ausgebildeten Kanälen miteinander verbunden werden.

Insbesondere können Verbindungen für Leitungen hergestellt werden, in welchen ein relativ geringer Druck, beispielsweise bis 6 bar herrscht. Solche Leitungen kommen beispielsweise bei Kühlwasserleitungen, insbesondere für Verbrennungsmotoren, oder Ladeluftleitungen für Verbrennungsmotoren zum Einsatz.

### Bezugszeichenliste

| | | | |
|---|---|---|---|
| 1 | Steckerteil | 33 | Begrenzungssteg |
| 2 | Steckerteil | 34 | Mantelabschnitt |
| 3 | Durchgangskanal | 35 | Bodensteg |
| 4 | Durchgangskanal | 36 | Raum |
| 5 | Einsteckrichtung | | |
| 6 | einsteckseitiges Ende | | |
| 7 | Einstecköffnung | | |
| 8 | Rastfeder | | |
| 9 | Schrägfläche | | |
| 10 | Rastschulter | | |
| 11 | Dichtung | | |
| 12 | zentrale Längsachse | | |
| 13 | zentrale Längsachse | | |
| 14 | Dichtlippe | | |
| 15 | äußere Oberfläche | | |
| 16 | Schmutzlippe | | |
| 17 | freies Ende | | |
| 18 | freies Ende | | |
| 19 | Dichtungsfuß | | |
| 19a | Abschnitt des Dichtungsfußes | | |
| 19b | Abschnitt des Dichtungsfußes | | |
| 20 | Verbindungssteg | | |
| 21 | Dichtungsnut | | |
| 26 | Begrenzungssteg | | |
| 27 | Steg | | |
| 28 | Vertiefung | | |
| 29 | Öffnung | | |
| 30 | Raum | | |
| 31 | Nut | | |
| 32 | Mantelabschnitt | | |

## Patentansprüche

1. Steckverbindung zum Verbinden von Leitungen für flüssige oder gasförmige Medien, umfassend ein erstes Steckerteil (1), welches einen Durchgangskanal (3) aufweist, ein zweites Steckerteil (2), in welches das erste Steckerteil (1) in eine Einsteckrichtung (5) einsteckbar ist und welches einen Durchgangskanal (4) aufweist, und eine am zweiten Steckerteil (2) gehaltene Dichtung (11), wobei das zweite Steckerteil (2) einen zumindest über einen oder mehrere Abschnitte dieses Steckerteils (2) in dessen Umfangsrichtung verlaufenden, in Richtung zur zentralen Längsachse (13) des zweiten Steckerteils (2) abstehenden Steg (27) aufweist, der bezogen auf die Einsteckrichtung (5) des ersten Steckerteils (1) vor der Dichtung (11) angeordnet ist und von einem Abschnitt einer Wandung des zweiten Steckerteils (2) gebildet wird, welcher Abschnitt über eine Abkrümmung an einen zylinderförmigen Mantelabschnitt (32) der Wandung des zweiten Steckerteils (2) anschließt, und wobei der Steg (27) zumindest über einen oder mehrere Abschnitte seines Verlaufs in Umfangsrichtung des zweiten Steckerteils (2) im Längsmittelschnitt durch das zweite Steckerteil (2) gesehen auf der von der Dichtung (11) abgewandten Seite eine Vertiefung (28) ausbildet, wobei ein vom Mantelabschnitt (32) abgelegenes, inneres Ende des Stegs (27) über die Abkrümmung mit einem, von einem Abschnitt der Wandung des zweiten Steckerteils (2) gebildeten Begrenzungssteg (26) verbunden ist, welcher Begrenzungssteg (26) eine Dichtungsnut (21) zur Aufnahme der Dichtung (11) auf der einen Seite der Dichtungsnut (21) begrenzt, sodass eine entsprechende Seitwärtsbewegung der Dichtung (11) in der Dichtungsnut (21) vom Begrenzungssteg (26) gestoppt wird, **dadurch gekennzeichnet, dass** der die Dichtungsnut (21) begrenzende Begrenzungssteg (26) eine hinterschnittene Form aufweist und durch eine solche Hinterschneidung ein Raum (30) ausgebildet ist, wobei ein Dichtungsfuß (19) der Dichtung (11) zur Ermöglichung bzw. Erleichterung des Eintritts von Schmutzpartikeln in den Raum (30) an seiner dem Begrenzungssteg (26) zugewandten Stirnseite eine Mehrzahl von in Umfangsrichtung beabstandeten Nuten (31) aufweist.

2. Steckverbindung nach Anspruch 1, **dadurch gekennzeichnet, dass** die Vertiefung (28) in Umfangsrichtung des zweiten Steckerteils (2) rinnenförmig verlaufend ausgebildet ist.

3. Steckverbindung nach Anspruch 1 oder 2, **dadurch gekennzeichnet, dass** der Steg (27) um das zweite Steckerteil (2) durchgehend ringförmig verläuft.

4. Steckverbindung nach Anspruch 3, **dadurch gekennzeichnet, dass** sich die Vertiefung (28) in Umfangsrichtung des Stegs (27) durchgehend ringförmig erstreckt.

5. Steckverbindung nach einem der Ansprüche 1 bis 4, **dadurch gekennzeichnet, dass** der Steg (27) im Bereich des Bodens der Vertiefung (28) mindestens eine Öffnung (29) aufweist, die auf der anderen Seite des Stegs (27) außerhalb eines von der Dichtung (11) abgedichteten Innenraums der Steckverbindung mündet.

6. Steckverbindung nach Anspruch 5, **dadurch gekennzeichnet, dass** der Steg (27) mehrere in Umfangsrichtung voneinander beabstandete solche Öffnungen (29) im Bereich des Bodens der Vertiefung (28) aufweist.

7. Steckverbindung nach einem der Ansprüche 1 bis 6, **dadurch gekennzeichnet, dass** der Begrenzungssteg (26) eine kleinere radiale Ausdehnung aufweist, als der die Vertiefung (28) bildende Steg (27).

8. Steckverbindung nach einem der Ansprüche 1 bis 7, **dadurch gekennzeichnet, dass** der die Vertiefung (28) bildende Steg (27) im Längsmittelschnitt des zweiten Steckerteils (2) gesehen eine radiale Erstreckung aufweist, die sich mit der radialen Erstreckung der Dichtung (11) teilweise überlappt.

9. Steckverbindung nach einem der Ansprüche 1 bis 8, **dadurch gekennzeichnet, dass** die Dichtung (11) weiters eine Schmutzlippe (16) aufweist, welche im geschlossenen Zustand der Steckverbindung außerhalb des von einer Dichtlippe (14) der Dichtung (11) abgedichteten Innenraums der Steckverbindung am ersten Steckerteil (1) anliegt.

10. Steckverbindung nach Anspruch 9, **dadurch gekennzeichnet, dass** sich die Schmutzlippe (16) bei einer Verschwenkung der Dichtlippe (14) durch das erste Steckerteil (1) beim Einstecken des ersten Steckerteils (1) in das zweite Steckerteil (2) durch ihre Verbindung mit der Dichtlippe (14) gleichsinnig verschwenkt.

11. Steckverbindung nach Anspruch 9 oder 10, **dadurch gekennzeichnet, dass** im geöffneten Zustand der Steckverbindung ein freies Ende (18) der Schmutzlippe (16) in Richtung der axialen Einsteckrichtung (5) betrachtet zumindest teilweise verdeckt hinter dem nach innen, in Richtung zur zentralen Längsachse (13) vorspringenden Begrenzungssteg (26) angeordnet ist.

## Claims

1. Connector for connecting conduits for liquid or gaseous media, comprising a first connector part (1) having a passage (3), a second connecter part (2) in which the first connector part (1) can be inserted in an insertion direction (5) and which has a passage (4), and a seal (11) retained on the second connector part (2), and the second connector part (2) has a projecting web (27) extending across at least one or more portions of this connector part (2) in its circumferential direction in the direction towards the central longitudinal axis (13) of the second connector part (2), which is disposed before the seal (11) by reference to the insertion direction (5) of the first connector part (1) and is formed by a portion of a wall of the second connector part (2), which portion adjoins a cylindrical wall portion (32) of the wall of the second connector part (2) via a curvature, and the web (27) forms a recess (28) at least across one or more portions of its extension in the circumferential direction of the second connector part (2) on the side facing away from the seal (11) as viewed in the longitudinal mid-section through the second connector part (2), and an inner end of the web (27) disposed remote from the wall portion (32) is connected to a delimiting web (26) formed by a portion of the wall of the second connector part (2) via the curvature, which delimiting web (26) delimits a seal groove (21) for accommodating the seal (11) on one side of the seal groove (21) so that a corresponding sideways movement of the seal (11) in the seal groove (21) is prevented by the delimiting web (26), **characterised in that** the delimiting web (26) delimiting the seal groove (21) has an undercut shape and a space (30) is formed by such an undercut, and a seal foot (19) of the seal (11) has a plurality of grooves (31) spaced apart in the circumferential direction on its end face directed towards the delimiting web (26) to allow or facilitate ingress to the space (30) by dirt particles.

2. Connector as claimed in claim 1, **characterised in that** the recess (28) extends in a channel shape in the circumferential direction of the second connector part (2).

3. Connector as claimed in claim 1 or 2, **characterised in that** the web (27) extends continuously around the second connector part (2) in an annular shape.

4. Connector as claimed in claim 3, **characterised in that** the recess (28) extends continuously in the circumferential direction of the web (27).

5. Connector as claimed in one of claims 1 to 4, **characterised in that** the web (27) has at least one orifice (29) in the region of the base of the recess (28), which opens on the other side of the web (27) outside of an interior of the connector sealed by the seal (11).

6. Connector as claimed in claim 5, **characterised in that** the web (27) has several such orifices (29) in the region of the base of the recess (28) spaced apart from one another in the circumferential direction.

7. Connector as claimed in one of claims 1 to 6, **characterised in that** the delimiting web (26) has a shorter radial extension than the web (27) forming the recess (28).

8. Connector as claimed in one of claims 1 to 7, **characterised in that** the web (27) forming the recess (28) has a radial extension, as viewed in the longitudinal mid-section of the second connector part (2), which partially overlaps with the radial extension of the seal (11).

9. Connector as claimed in one of claims 1 to 8, **characterised in that** the seal (11) also has a dirt lip (16), which lies against the first connector part (1) outside of the interior of the connector sealed by a sealing lip (14) of the seal (11) when the connector is in the closed state.

10. Connector as claimed in claim 9, **characterised in that** when the sealing lip (14) is made to pivot by the first connector part (1) as the first connector part (1) is inserted in the second connector part (2), the dirt lip (16) pivots in the same direction due to its connection to the sealing lip (14).

11. Connector as claimed in claim 9 or 10, **characterised in that** when the connector is in the open state, a free end (18) of the dirt lip (16) is disposed so that it is at least partially hidden behind the delimiting web (26) projecting inwardly in the direction towards the central longitudinal axis (13), as viewed in the direction of the axial insertion direction (5).

## Revendications

1. Connecteur à fiches destiné à relier des conduites pour substances liquides ou gazeuses, comprenant une première partie de fiche (1) qui présente un canal traversant (3), une deuxième partie de fiche (2) dans laquelle la première partie de fiche (1) peut être insérée dans une direction d'insertion (5) et qui présente un canal traversant (4), et un joint d'étanchéité (11) maintenu sur la deuxième partie de fiche (2), dans lequel la deuxième partie de fiche (2) présente une traverse (27) s'étendant au moins sur une ou plusieurs sections de cette partie de fiche (2) dans la direction de sa circonférence, en saillie dans la direction de l'axe longitudinal central (13) de la deuxième partie de fiche (2), qui est agencée avant le joint d'étanchéité (11) par référence à la direction d'insertion (5) de la première partie de fiche (1) et qui est formée par une section d'une paroi de la deuxième partie de fiche (2), laquelle section est reliée par le biais d'une courbure à une section de gaine de forme cylindrique (32) de la paroi de la deuxième partie de fiche (2), et dans lequel la traverse (27) forme, au moins sur une ou plusieurs sections de son étendue dans la direction de la circonférence de la deuxième partie de fiche (2), dans une vue en coupe médiane longitudinale à travers la deuxième partie de fiche (2), un enfoncement (28) sur le côté en opposition au joint d'étanchéité (11), étant entendu qu'une extrémité intérieure de la traverse (27) distante de la section de gaine (32) est reliée par le biais de la courbure avec une traverse de délimitation (26) formée par une section de la paroi de la deuxième partie de traverse (2), laquelle traverse de délimitation (26) délimite une rainure d'étanchéité (21) destinée à recevoir le joint d'étanchéité (11) sur un côté de la rainure d'étanchéité (21) de telle sorte qu'un déplacement latéral correspondant du joint d'étanchéité (21) dans la rainure d'étanchéité (21) est arrêté par la traverse de délimitation (26), **caractérisé en ce que** la traverse de délimitation (26) délimitant la rainure d'étanchéité (21) présente une forme en contre-dépouille et un espace (30) est formé par une telle contre-dépouille, étant entendu que le pied d'étanchéité (19) du joint d'étanchéité (11) présente, sur son côté frontal dirigé vers la traverse de délimitation (26), une pluralité de rainures (31) écartées dans la direction de la circonférence destinées à permettre ou à faciliter la pénétration de particules de saleté dans l'espace (30).

2. Connecteur à fiches selon la revendication 1, **caractérisé en ce que** l'enfoncement (28) est réalisé de façon à s'étendre en forme de rigole dans la direction de la circonférence de la deuxième partie de fiche (2).

3. Connecteur à fiches selon la revendication 1 ou 2, **caractérisé en ce que** la traverse (27) s'étend dans une forme annulaire continue autour de la deuxième partie de fiche (2).

4. Connecteur à fiches selon la revendication 3, **caractérisé en ce que** l'enfoncement (28) s'étend dans une forme annulaire continue dans la direction de la circonférence de la traverse (27).

5. Connecteur à fiches selon l'une des revendications 1 à 4, **caractérisé en ce que** la traverse (27) présente, dans la zone du fond de l'enfoncement (28), au moins une ouverture (29) qui débouche sur l'autre côté de la traverse (27) en dehors d'un espace intérieur du connecteur à fiches étanchéifié par le joint d'étanchéité (11).

6. Connecteur à fiches selon la revendication 5, **caractérisé en ce que** la traverse (27) présente plusieurs ouvertures (29) de ce type écartées les unes des autres dans la direction de la circonférence dans la zone du fond de l'enfoncement (28).

7. Connecteur à fiches selon l'une des revendications 1 à 6, **caractérisé en ce que** la traverse de délimitation (26) présente une élasticité radiale inférieure à celle de la traverse (27) formant l'enfoncement (28).

8. Connecteur à fiches selon l'une des revendications 1 à 7, **caractérisé en ce que** la traverse (27) formant l'enfoncement (28) présente, dans une vue en coupe médiane longitudinale à travers la deuxième partie de fiche (2), un prolongement radial qui se chevauche partiellement avec le prolongement radial du joint d'étanchéité (11).

9. Connecteur à fiches selon l'une des revendications 1 à 8, **caractérisé en ce que** le joint d'étanchéité (11) présente en outre une lèvre antisalissure (16), qui dans la position fermée du connecteur à fiches, prend appui sur la première partie de fiche (1) en dehors de l'espace intérieur du connecteur à fiches étanchéifié par une lèvre d'étanchéité (14) du joint d'étanchéité (11).

10. Connecteur à fiches selon la revendication 9, **caractérisé en ce que** lors d'un basculement de la lèvre d'étanchéité (14) à travers la première partie de fiche (1) lors de l'insertion de la première partie de fiche (1) dans la deuxième partie de fiche (2), la lèvre antisalissure (16) bascule dans le même sens étant donné qu'elle est reliée à la lèvre d'étanchéité (14).

11. Connecteur à fiches selon la revendication 9 ou 10, **caractérisé en ce que** dans la position ouverte du connecteur à fiches, une extrémité libre (18) de la lèvre antisalissure (16), considérée dans le sens de la direction d'insertion axiale (5), est agencée de façon au moins partiellement recouverte après la traverse de délimitation (26) faisant saillie vers l'intérieur dans la direction de l'axe longitudinal central (13).
